# EUROPÄISCHE PATENTSCHRIFT

(11) **EP 2 279 074 B1**
(45) Veröffentlichungstag und Bekanntmachung des Hinweises auf die Patenterteilung: **07.11.2012**
(21) Anmeldenummer: 09745537.2
(22) Anmeldetag: 11.05.2009
(51) Int. Cl.: B29C 70/44

(54) **VERFAHREN ZUR HERSTELLUNG EIN INTEGRALES HOHLBAUTEIL AUS FASERVERBUNDWERKSTOFF**
METHOD OF MANUFACTURING AN INTEGRAL HOLLOW COMPONENT CONSISTING OF A FIBRE COMPOSITE MATERIAL
PROCÉDÉ POUR LA FABRICATION D'UN ÉLÉMENT DE CONSTRUCTION MONOBLOC CREUX EN MATÉRIAU COMPOSITE RENFORCÉ PAR FIBRES

(30) Priorität: 15.05.2008 DE 102008023629
(43) Veröffentlichungstag der Anmeldung: 02.02.2011
(73) Patentinhaber: MT Aerospace AG, 86153 Augsburg (DE)
(72) Erfinder: LIPPERT, Thomas, 86179 Augsburg (DE); FRÖHLICH, Angelika, 85253 Kleinberghofen (DE); RADMANN, Thomas, 86152 Augsburg (DE)
(74) Vertreter: Grape & Schwarzensteiner
(86) Internationale Anmeldenummer: PCT/EP2009/003332
(87) Internationale Veröffentlichungsnummer: WO 2009/138203

(56) Entgegenhaltungen:
- EP-A- 0 020 248
- EP-A- 0 628 402
- FR-A- 2 550 123
- FR-A1- 2 894 874
- GB-A- 2 006 092
- US-A- 4 187 271
- US-A- 6 071 460
- US-A1- 2005 042 961

## Beschreibung

Die vorliegende Erfindung betrifft ein Verfahren zur Herstellung eines integralen, d.h. einteiligen Hohlbauteils aus Faserverbundkunststoff und ein damit hergestelltes Hohlbauteil.

Hohlbauteile, wie solche im Stand der Technik bekannt sind, weisen herstellungsbedingt Naht-, respektive Fügungsstellen auf, da sie beispielsweise aus zwei Halbschalen zusammengesetzt sind. Diese Naht- bzw. Fügungsstellen können als Sollbruchstellen verstanden werden oder bilden Angriffspunkte bei hoher mechanischer Belastung. Durch die Notwendigkeit des Verbindens der Teilelemente mit Verbindungselementen, wie Schrauben oder Nieten oder dergleichen, erhöht sich das Gewicht der zusammengesetzten Hohlbauteile.

Aufgabe der vorliegenden Erfindung war es, Sollbruchstellen bzw. Angriffspunkte bei hoher mechanischer Belastung zu vermeiden, insbesondere ein Hohlbauteil zur Verfügung zu stellen, das über hohe Druckfestigkeit und Steifigkeit über seinen gesamten Aufbau, bei gleichzeitig verringertem Gewicht, verfügt. Hierzu sollte insbesondere ein kostengünstiges und einfaches Verfahren angegeben werden.

In der FR 2 550 123 wird ein Verfahren zur Herstellung von Rohren und Kurbelstangen aus Carbonfaserbändern oder -bögen, die mit Harz imprägniert sind, beschrieben. Das Rohr bzw. die Kurbelstange werden in einer Form ausgebildet, wobei während der Polymerisation des die Fasern umgebenden Harzes die Bänder oder Bögen an den Enden der Form fixiert werden.

In der FR 2 894 874 ist eine Nabe für ein Rad eines Fahrrads zur Aufnahme einer Achsnabe beschrieben. Der Nabenkörper umfasst eine rohrförmige Hülle aus Verbundmaterial aus von Harz umhüllten Fasern. Die rohrförmige Hülle beinhaltet wenigstens eine Faserlage, die aus einer rohrförmigen Hülle gebildet ist. Gegenstand der Erfindung ist somit ein Verfahren zur Herstellung eines einteiligen Hohlbauteils aus Faserverbundwerkstoff, welches die Schritte gemäß Anspruch 1 umfasst.

Im Rahmen der vorliegenden Erfindung bedeutet der Begriff Faserlage eine einzelne aus Fasern gebildete Schicht, wohingegen Fasergelege für die Summe der übereinander abgelegten Faserlagen verwendet wird.

Das Aufblasen des luftdichten, dehnbaren Schlauchs erfolgt über das perforierte Mantelrohr, indem Luft in das Innere des Mantelrohres gepresst wird. Dadurch wird sichergestellt, dass die Lagen aus Faserharzsystem fest gegen die Wand der Form gedrückt werden, so dass zum Einen ein fester Verbund der ausgehärteten faserverstärkten Harzmatrix sichergestellt ist und zum Anderen insbesondere die Außenseite des erzeugten Hohlbauteils eine sehr glatte Oberfläche erhält, so dass eine Nachbearbeitung des Hohlbauteils meist unterbleiben kann.

Die Aushärtung kann bei dem erfindungsgemäßen Verfahren, beispielsweise in einem Ofen, und insbesondere ohne Autoklav hergestellt werden. Diese Vereinfachung des üblichen Herstellungsverfahrens, wie es aus der Infusionstechnik bekannt ist, wird durch die Anordnung des luftdichten, dehnbaren Schlauchs ermöglicht. Durch Aufblasen des Schlauches wird das Faserharzsystem mit einem Druck von ca. 10 bar gegen die Innenwand der Form gepresst. Das Verfahren ist damit nicht nur einfacher sondern auch kostengünstiger.

Durch die erfindungsgemäß vorgeschlagene Ablage der Faserlage(n) verfügt das erzeugte Hohlbauteil über eine vollständig in sich geschlossene Struktur, wodurch insbesondere Angriffspunkte bei hoher mechanischer Belastung vermieden werden können. Aufwändige Verbindungstechniken, wie Kleben, Verschrauben oder auch Vernieten von Teilhohlbauteilen lassen sich vermeiden, wodurch die Fertigungskosten gesenkt werden und Gewicht des Hohlbauteils eingespart wird.

Erfindungsgemäß wird die wenigstens eine Faserlage nahtlos, insbesondere durch Flechten, Weben oder Stricken, über dem luftdichten, dehnbaren Schlauch trocken abgelegt. Damit erzielt man ein Hohlbauteil von gleichförmiger Dicke über die gesamte Hohlbauteilwand, da an keiner Stelle Faserlagen überlappt werden müssen. Das bringt eine weitere Gewichtsersparnis mit sich.

Die Harzmatrix selbst wird je nach beabsichtigter Verwendung des Hohlbauteils oder des Herstellungsverfahrens aus einem heiß oder kalt härtenden Harzsystem aufgebaut.

Geeignete heiß aushärtende Harzsysteme sind Epoxid-Harze mit einer deutlich niedrigen Viskosität von 20 bis 50 mPas bei Infusionstemperatur. Beispielhaft können RTM6 (von Hexcel) und 977-20 (von CYTEC) erwähnt werden.

Unter kalt aushärtenden Harzsystemen versteht man solche, welche bei niederen Temperaturen, vorzugsweise im Bereich der Raumtemperatur aushärten. Solche Harzsysteme lassen sich ohne wesentliche Zufuhr von Wärme, beispielsweise photoinitiiert, aushärten.

Zum Tränken der Faserlage(n) bzw. Fasergelege mit einem flüssigen Harzsystem wird ein übliches Harzinfusionsverfahren durchgeführt, wie später erläutert. Um eine gleichmäßige Verteilung des Harzsystems zu gewährleisten sollte über der Infiltrationsseite des Fasergeleges ein Verteilergewebe angeordnet werden.

Bei einer weiteren Verfahrensvariante werden die das Fasergelege bildenden Faserlagen jeweils einzeln mit einem Harzfilm belegt, bevor die Anordnung in die Form eingebracht wird. Dieser Harzfilm wird dann durch Erwärmen geschmolzen und das flüssige Harz in die Faserlage eindringen gelassen. Bei dieser Vorgehensweise müssen keine zusätzlichen Maßnahmen zur gleichmäßigen Infiltration der Faserlagen mit dem Harz vorgesehen werden.

Die Form zur Herstellung des Hohlbauteiles weist bei einer bevorzugten Ausführungsform des erfindungsgemäßen Verfahrens wenigstens an einer Endseite Mittel zur integralen Anformung eines Flansches auf, welche dann ebenfalls mit dem Fasergelege aus wenigstens einer Faserlage ausgerüstet werden. Der Flansch wird dann in einem Zuge mit dem Hohlbauteil hergestellt. Gegebenenfalls ist auch ein Anstauchen des Hohlbauteiles zur Herstellung des Flansches denkbar. In jedem Falle wird mit dieser Maßnahme eine deutlich verbesserte Stabilität des Hohlbauteiles, insbesondere auch an dessen Verbindungsstelle zu anderen Bauelementen, erzielt. Der angeformte Flansch kann mit Bohrungen, beispielsweise zum Verschrauben mit anderen Bauelementen, versehen werden.

Das erfindungsgemäße Verfahren zur Herstellung eines Hohlbauteils ist insbesondere auch zum Aufbau von sogenannten Sandwich-Strukturen geeignet. Dabei wird über einem ersten Fasergelege, aufgebaut aus wenigstens einer Faserlage, ein Kernmaterial voll umfänglich angeordnet. Darüber wird dann ein weiteres Fasergelege aus wenigstens einer Faserlage abgelegt. Es folgen die Schritte des Einlegens in die Form, des Tränkens mit Harz und des Aushärtens unter Anwendung von Druck (durch den aufgeblasenen Schlauch) und gegebenenfalls Wärme oder anderer Mittel, welche die Aushärtung initiieren.

Das Kernmaterial sollte erfindungsgemäß aus Materialien mit hoher Steifigkeit und hoher Druckfestigkeit ausgewählt werden. Schaumstoffe, welche solche Eigenschaften aufweisen, sind beispielsweise ROHACELL^{®} (Evonik Röhm GmbH) und CONTICELL (Continental AG), welche als solche in der Luft- und Raumfahrt, aber auch im Schiff- und Schienenfahrzeugbau als Kernwerkstoff in hoch belastbaren Sandwich-Konstruktionen Verwendung finden.

Bei den für die abgelegten Faserlagen verwendeten Fasern handelt es sich vorzugsweise um Fasern, welche aus der Gruppe ausgewählt sind, die aus Kohlenstoff-, Aramid-, Aluminiumoxid-, Aluminiumnitrid-, Mullit-, Siliciumcarbid-, Siliciumnitrid-, Bornitrid- oder Graphitfasern besteht. Es können auch Gemische aus diesen Fasern verwendet werden oder die Faserlagen untereinander sind aus den unterschiedlichen Fasern aufgebaut.

Der luftdichte, dehnbare Schlauch ist per se in sich geschlossen und kann beispielsweise eine Art Blase sein und ist bevorzugt ein Schlauch aus Silikon oder einem anderen geeigneten Material.

Die Hohlbauteile weisen eine vollständig in sich geschlossene Struktur auf, sind somit einteilig. Der Querschnitt ist nicht besonders beschränkt. Er kann vieleckig, tropfenförmig, oval oder rund sein. Auch ist es denkbar, dass sich der Querschnitt über die Längserstreckung des Bauteils ändert, also zum Beispiel von rund in quadratisch übergeht.

Die Faserlagen sind zur Optimierung der Festigkeit des Bauteils bidirektional und in ±45°-Ausrichtung abgelegt.

Die Erfindung wird nun anhand der nachfolgenden Zeichnungen näher erläutert. Darin zeigen:
- Figur 1: ein erfindungsgemäßes Hohlbauteil in einer bevorzugten Verwendung als Heckausleger für einen Helikopter;
- Figur 2: einen Längsschnitt, welcher den Aufbau zur Herstellung eines Hohlbauteiles in Sandwich-Struktur gemäß der vorliegenden Erfindung zeigt;
- Figur 3A bis 3G: das erfindungsgemäße Fertigungskonzept im Detail.

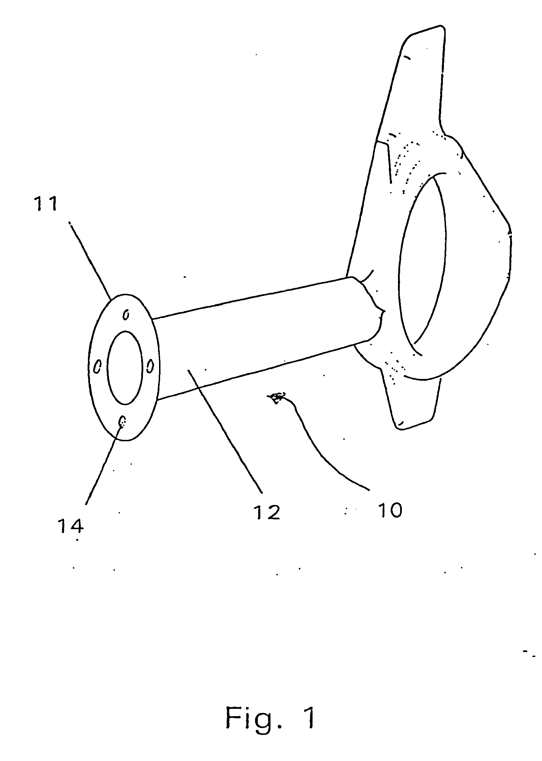

In Figur 1 ist anhand eines Heckauslegers für einen Helikopter ein Verbundhohlbauteil 10 dargestellt. Dieses weist an einem Endabschnitt 12 einen integral angeformten Flansch 11 auf, welcher mit Durchbohrungen 14 zur Verbindung mit anderen Bauelementen ausgerüstet ist.

Die folgende Beschreibung ist auf die Herstellung einer Sandwich-Struktur gerichtet. Jedoch sollen weder das erfindungsgemäße Verfahren noch die Hohlbauteile selbst auf eine Sandwich-Struktur beschränkt sein. Es wird ausdrücklich festgehalten, dass die Hohlbauteile nur aus Faserverbundkunststoff, also ohne Kern, aufgebaut werden/sein können.

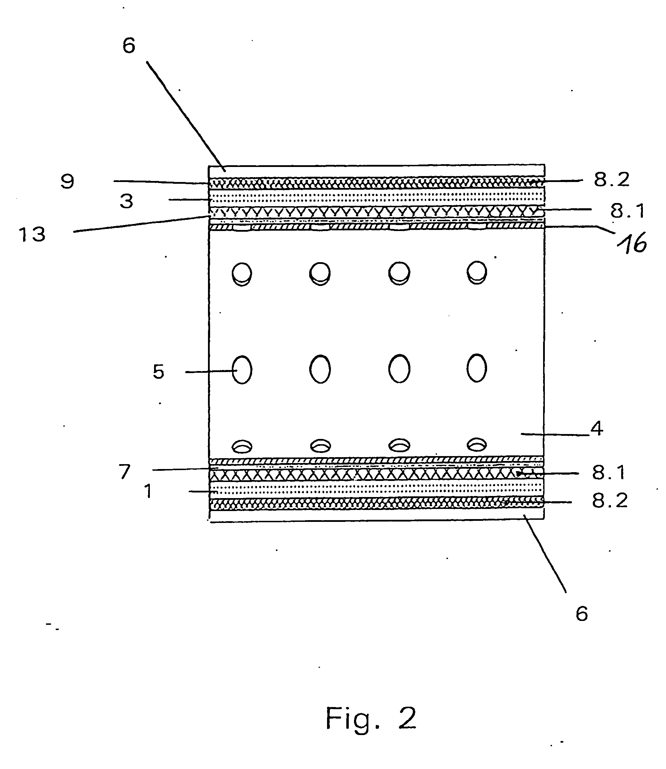

In der Figur 2 ist damit im Längsschnitt ein Aufbau zur Herstellung des erfindungsgemäßen Hohlbauteiles in Sandwich-Struktur dargestellt.

Die Figur 2 zeigt insbesondere ein Mantelrohr 4, das über seine Mantelfläche Perforationen 5 aufweist. Auf diesem Mantelrohr 4 ist ein luftdichter, dehnbarer Schlauch 7 derart angeordnet, dass er über das Mantelrohr 4 aufgeblasen werden kann. Über dem luftdichten Schlauch 7, ist ein erstes Fasergelege 8.1 aus wenigstens einer Faserlage 8 (nicht detailliert) abgelegt. Dieses Fasergelege 8.1 wird nahtlos durch Flechten. Weben oder Stricken um das Mantelrohr 4 und den luftdichten, dehnbaren Schlauch herum ausgebildet sein. Darüber ist das Kernmaterial 3 für die Sandwich-struktur des Verbund-Hohlbauteils 10 angeordnet und darüber das zweite äußere Fasergelege 8.2 aus wenigstens einer Faserlage (nicht detailliert), welche erfindungsgemäß obligatorisch überlappend trocken, in Form eines Prepregs oder in einer besonderen Ausführungsform bevorzugt nahtlos, beispielsweise durch Flechten, Weben oder Stricken, ausgebildet ist. Die Fasergelege 8.1 und 8.2 können aus den gleichen Fasern oder je nach Verwendung des herzustellenden Hohlbauteils aus unterschiedlichen Fasern aufgebaut sein. Dieser gesamte Aufbau ist, wie gezeigt, in eine die Geometrie des Hohlbauteils bestimmende Form 6 eingebracht.

Die Harzinfiltration kann beispielsweise über die Endseiten 9 und 13 der Fasergelege 8.1 und 8.2 an dafür vorzusehenden (nicht gezeigten) Ansatzpunkten oder hinsichtlich des Fasergeleges 8.2 über nicht dargestellte Längsnuten oder dergleichen Ausnehmungen in der Form 6 vorgenommen werden. In geeigneter Weise wird zur Harzinfiltration der Fasergelege 8.1 und 8.2 ein Verteilergewebe zwischen der Form 6 und dem Fasergelege 8.2, respektive dem luftdichten, dehnbaren Schlauch 7 und dem Fasergelege 8.1 angeordnet, um eine gleichmäßige Infiltration mit Harz über die Fasergelege 8.1 und 8.2 zu gewährleisten. Diese Maßnahme ist in Figur 2 zur Vereinfachung der Darstellung nicht gezeigt.

Nachdem die Fasergelege 8.1 und 8.2 mit Harz infiltriert sind, wird über das Mantelrohr 4 bzw. die darin vorgesehenen Perforationen 5 Luft in das System eingepresst, wodurch der luftdichte, dehnbare Schlauch 7 aufgeblasen wird und damit der Aufbau aus mit Harz infiltriertem Fasergelege 8.1 und 8.2 und Kernmaterial 3 gegen die Innenwand der Form 6 gepresst wird. In diesem Zustand wird die Aushärtung des Harzes durchgeführt. Das Aushärten kann durch im Stand der Technik gängige Maßnahmen, wie Erwärmen in einem Ofen, durch Photoinitiierung, mit Hilfe von Mikrowellen, durch Induktion oder Elektronenstrahlinduktion bewirkt werden. Durch das Anpressen des Aufbaus durch den Schlauch 7 bei einem Druck von etwa 10 bar an die Innenwand der Form 6 wird die Außenhaut des so erzeugten Hohlbauteiles 10 besonders glatt und muss nicht notwendigerweise nachbearbeitet werden.

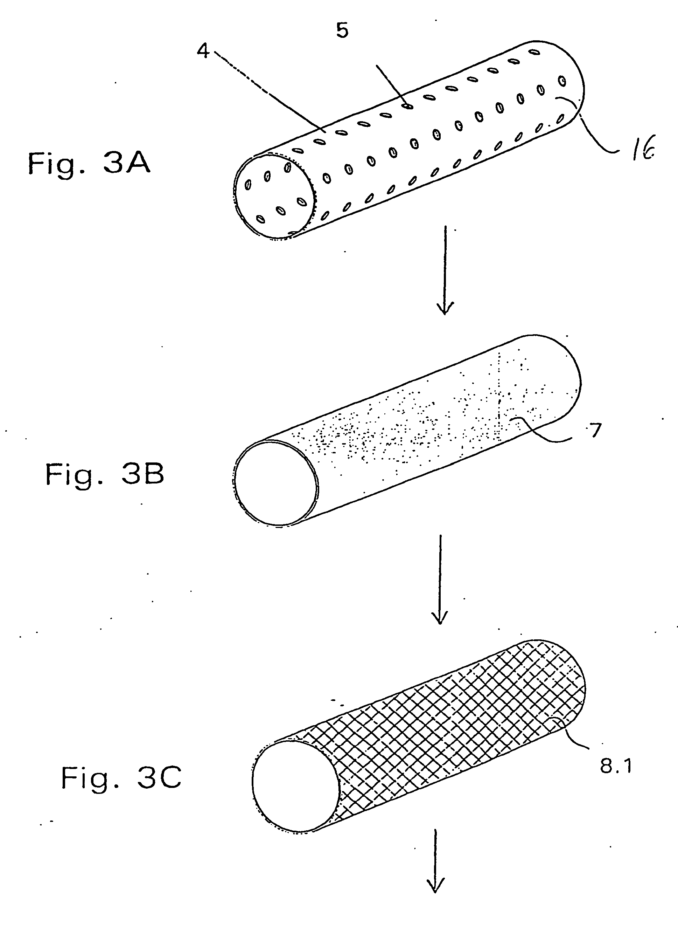

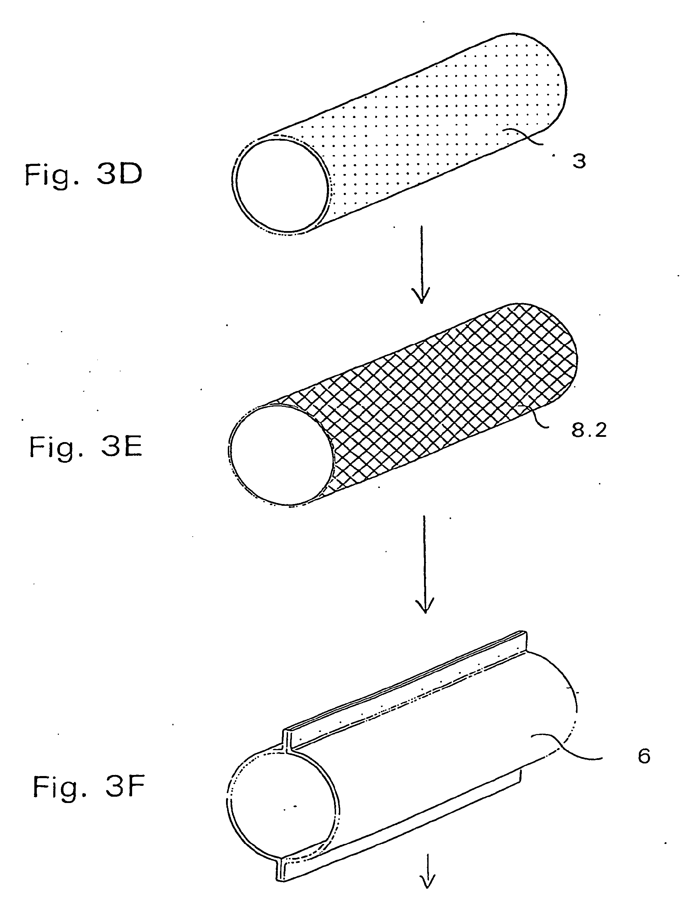

In den Figuren 3A bis 3G ist, wieder für eine Sandwich-Struktur, das erfindungsgemäße Fertigungskonzept detailliert dargestellt, wobei zu unterstellen ist, dass die Lagen pro Schritt übereinander zu liegen kommen. Man verwendet demzufolge ein Mantelrohr 4, das über seine Oberfläche verteilt Perforationen 5 aufweist (Fig. 3A). Über dieses Mantelrohr 4 mit Perforationen 5 wird der luftdichte, dehnbare Schlauch 7 angeordnet (Fig. 3B). Über dem Schlauch 7 wird das erste Fasergelege 8.1 aus wenigstens einer Faserlage (nicht detailliert) aufgebaut, nahtlos durch Umflechten, Umstricken oder Umweben (Fig. 3C). Das Fasergelege 8.1 wird dann mit der Schicht Kernmaterial 3 umgeben (Fig. 3D) und darauf wird schließlich das Fasergelege 8.2 aus wenigstens einer Faserlage, wieder vorzugsweise nahtlos, beispielsweise durch Umflechten, Umweben oder Umstricken ausgebildet (Fig. 3E). Die Fasergelege bilden gewissermaßen einen Strumpf um die jeweils darunter liegende Lage.

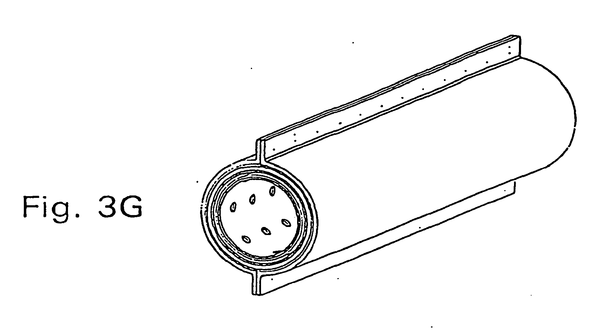

Diese Anordnung wird dann in eine Form 6 (Fig. 3F) eingebracht. Die Form 6 besteht vorzugsweise aus zwei Halbschalen, welche um den vorgenannten Aufbau gelegt und beispielsweise durch Verklammern oder Verschrauben miteinander verbunden werden. Dieser Aufbau, wie er in Fig 3G dargestellt ist, wird dann, nach dem die Fasergelege 8.1 und 8.2 in einer dem Fachmann bekannten Weise mit Harz getränkt worden sind und der Schlauch 7 zum Setzen, respektive Verdichten der Fasergelege 8.1 und 8.2 aufgeblasen worden ist, zum Aushärten des Harzes beispielsweise in einen Ofen gegeben, welcher je nach dem verwendeten Harzsystem, wie solche eingangs beschrieben worden sind, auf die Aushärtungstemperatur erwärmt und dann auf Raumtemperatur zurück geführt wird. Wie bereits vorher erwähnt wurde, kann je nach verwendetem Harzsystem das Aushärten gegebenenfalls auch bei Raumtemperatur erfolgen oder durch Einwirken von Mikrowellen, durch Induktion oder durch Elektronenstrahlinduktion durchgeführt werden.

Nach diesem Prozessschritt wird die Form 6, das Mantelrohr 4 und der luftdichte, dehnbare Schlauch 7 entfernt.

Das Hohlbauteil 10, hier mit Sandwich-Struktur, das auf diese Weise hergestellt ist, weist die eingangs erwähnten gewünschten Eigenschaften auf, wie Leichtigkeit, hohe Steifigkeit und Druckfestigkeit sowie Stabilität bei höchster mechanischer Belastung, und verfügt aufgrund der erfindungsgemäßen Herstellungstechnik über eine glatte äußere Oberfläche, welche nicht notwendigerweise nachbearbeitet werden muss.

## Patentansprüche

1. Verfahren zur Herstellung eines einteiligen Hohlbauteils (10) aus Faserverbundwerkstoff, welches die folgenden Schritte umfasst
- Umkleiden eines den Abmessungen des herzustellenden Hohlbauteils (10) im Wesentlichen entsprechenden Mantelrohrs mit einem luftdichten, dehnbaren Schlauch (7), wobei das Mantelrohr (4) über seine Mantelfläche Perforationen (5) aufweist,
- Ausbilden wenigstens einer geschlossenen, nahtlosen Faserlage (8) umfänglich auf dem Schlauch (7) zum Erzeugen eines Fasergeleges (8.1), indem die wenigstens eine Faserlage (8) nahtlos durch Flechten, Weben oder Stricken auf dem Schlauch (7) trocken abgelegt wird.
- Einbringen dieser Anordnung in eine den Abmessungen des herzustellenden Hohlbauteils (10) entsprechende Form (6),
- Tränken der wenigstens einen Faserlage (8) bzw. des Fasergeleges (8.1) mit einem Harzsystem,
- Einpressen der so gebildeten Faser/Harz-Schicht in die Form (6) bei einem Druck von etwa 10 bar durch Aufblasen des luftdichten, dehnbaren Schlauchs (7) und dann Aushärten des Harzsystems, unter Ausbildung des einteilig geformten Hohlbauteils (10).

2. Verfahren nach Anspruch 1, **dadurch gekennzeichnet, dass** je nach beabsichtigter Verwendung des Hohlbauteils (10) mit einem heiß oder kalt aushärtenden Harzsystem getränkt wird und dementsprechend heiß oder kalt ausgehärtet wird.

3. Verfahren nach einem der Ansprüche 1 oder 2, **dadurch gekennzeichnet, dass** zum Tränken der wenigstens einen Faserlage (8) mit Harz ein flüssiges Harzsystem verwendet wird.

4. Verfahren nach Anspruch 3, **dadurch gekennzeichnet, dass** das Tränken der Faserlage (8) mit Harz mittels eines Harzinfusionsverfahrens durchgeführt wird.

5. Verfahren nach einem der Ansprüche 1 oder 2, **dadurch gekennzeichnet, dass** zum Tränken der wenigstens einen Faserlage (8) mit Harz, jede Faserlage (8) vor dem Einbringen in die Form (6) mit einem Harzfilm belegt wird, welcher dann zunächst geschmolzen und in die Faserlage(n) (8) eindringen gelassen wird.

6. Verfahren nach einem der Ansprüche 1 bis 5, **dadurch gekennzeichnet, dass** die Form (6) wenigstens an einer Endseite Mittel zur integralen Anformung eines Flansches (11) aufweist.

7. Verfahren nach einem der Ansprüche 1 bis 6, **dadurch gekennzeichnet, dass** zur Ausbildung einer Sandwich-Struktur über einem ersten Fasergelege (8.1) ein Kernmaterial (3) angeordnet wird und umfänglich über diesem ein zweites Fasergelege (8.2) aus wenigstens einer Faserlage (8) ausgebildet wird.

8. Verfahren nach Anspruch 7, **dadurch gekennzeichnet, dass** das Kernmaterial (3) unter Schaumstoffen mit hoher Steifigkeit und hoher Druckfestigkeit ausgewählt wird.

9. Verfahren nach einem der vorhergehenden Ansprüche 1 bis 8, **dadurch gekennzeichnet, dass** die Fasern zur Ausbildung der Faserlagen (8), aus der Gruppe ausgewählt werden, die aus Kohlenstoff-, Aramid-, Aluminiumoxid-, Aluminiumnitrid-, Siliciumcarbid-, Siliciumnitrid-, Bornitrid- oder Graphitfasern besteht.

## Claims

1. Method for producing a single-piece hollow component (10) made of fibre composite material comprising the following steps:
- Sheathing a mantle tube that essentially matches the dimensions of the hollow component (10) to be produced with an air-tight dilatable hose (7), the mantle tube (4) having perforations (5) across its mantle surface;
- Producing at least one closed seamless fibre layer (8) surrounding the hose (7) circumferentially for creating a fibre fabric (8. 1) by depositing the at least one fibre layer (8) seamlessly and in a dry way onto the hose (7) by means of braiding, weaving or knitting;
- Inserting this arrangement into a mould (6) matching the hollow component (10) to be produced in dimensions;
- Soaking the at least one fibre layer (8) or the fibre fabric (8.1) with a resin system;
- Pressing the fibre/resin layer thus created into the mould (6) at a pressure of approximately 10 bar by inflating the air-tight dilatable hose (7) and then curing the resin system, thus forming the single-piece hollow component (10).

2. Method according to claim 1, **characterised by** the fact that depending on the intended use of the hollow component (10) a hot or cold-curing resin system is used for soaking and accordingly the curing is done hot or cold.

3. Method according to any of the claims 1 or 2, **characterised by** the fact that for soaking the at least one fibre layer (8) with resin a liquid resin system is used.

4. Method according to claim 3, **characterised by** the fact that the soaking of the fibre layer (8) with resin is done by means of a resin infusion system.

5. Method according to any of the claims 1 or 2, **characterised by** the fact that for soaking the at least one fibre layer (8) with resin, each fibre layer (8) before being inserted into the mould (6) is coated with a resin film which is then initially melted and allowed to enter into the fibre layer(s) (8).

6. Method according to any of the claims 1 to 5, **characterised by** the fact that the mould (6) at least on one end side has means for the integral incorporation of a flange (11).

7. Method according to any of the claims 1 to 6, **characterised by** the fact that for creating a sandwich structure over a first fibre fabric (8.1), a core material (3) is placed and circumferentially over this a second fibre fabric (8.2) is created from at least one fibre layer (8).

8. Method according to claim 7, **characterised by** the fact that the core material (3) is selected from foam materials with high stiffness and high pressure resistance.

9. Method according to any of the above claims 1 to 8, **characterised by** the fact that the fibres for creating the fibre layers (8) are selected from the group consisting of carbon, aramid, aluminium oxide, aluminium nitride, silicon carbide, silicon nitride, boron nitride or graphite fibres.

## Revendications

1. Procédé pour la fabrication d'un élément de construction creux monobloc (10) en matériau composite renforcé par des fibres, qui comprend les étapes suivantes :
- on habille un tube enveloppe dont les dimensions correspondent essentiellement à celles de l'élément de construction creux (10) à fabriquer avec un tuyau extensible étanche à l'air (7), le tube enveloppe (4) présentant des perforations (5) sur sa surface enveloppe,
- on réalise au moins une couche de fibres fermée (8) sans raccord sur la périphérie du tuyau (7) pour engendrer un non-tissé de fibres (8.1), en ce que l'on dépose ladite au moins une couche de fibres (8) sans raccord à sec sur le tuyau (7) par tressage, tissage ou tricotage,
- on introduit cet agencement dans un moule (6) dont les dimensions correspondent à celles de l'élément de construction creux (10) à fabriquer,
- on imbibe ladite au moins une couche de fibres (8) ou le non-tissé de fibres (8.1) avec un système de résine,
- on soumet la couche fibres/résine ainsi formée dans le moule (6) à un pressage sous une pression d'environ 10 bars par gonflage du tuyau extensible (7) étanche à l'air et ensuite durcissement du système de résine en réalisant l'élément de construction creux (10) moulé monobloc.

2. Procédé selon la revendication 1, **caractérisé en ce que**, selon l'utilisation envisagée pour l'élément de construction creux (10) on imbibe avec un système de résine durcissant à chaud ou à froid et on le fait durcir de façon correspondante à chaud ou à froid.

3. Procédé selon l'une des revendications 1 ou 2, **caractérisé en ce que** pour imbiber ladite au moins une couche de fibres (8) avec de la résine, on utilise un système de résine liquide.

4. Procédé selon la revendication 3, **caractérisé en ce que** l'étape consistant à imbiber la couche de fibres (8) avec de la résine est exécutée au moyen d'un procédé de perfusion de résine.

5. Procédé selon l'une des revendications 1 ou 2, **caractérisé en ce que** pour imbiber ladite au moins une couche de fibres (8) avec de la résine, chaque couche de fibres (8) est couverte d'un film de résine avant l'introduction dans le moule (6), ce film étant alors tout d'abord mis en fusion et amené à pénétrer dans la ou les couches de fibres (8).

6. Procédé selon l'une des revendications 1 à 5, **caractérisé en ce que** le moule (6) comprend au moins sur un côté terminal des moyens pour la conformation intégrale d'une bride (11).

7. Procédé selon l'une des revendications 1 à 6, **caractérisé en ce que** pour la réalisation d'une structure en sandwich par-dessus un premier non-tissé de fibres (8.1), on agence un matériau d'âme (3) et on réalise en périphérie par-dessus celui-ci un second non-tissé de fibres (8.2) formé d'au moins une couche de fibres (8).

8. Procédé selon la revendication 7, **caractérisé en ce que** le matériau d'âme (3) est choisi parmi des mousses présentant une haute rigidité et une haute résistance à la pression.

9. Procédé selon l'une des revendications précédentes 1 à 8, **caractérisé en ce que** les fibres pour la réalisation des couches de fibres (8) sont choisies parmi le groupe constitué des fibres de carbone, fibres aramides, fibres d'oxyde d'aluminium, fibres de nitrure d'aluminium, fibres de carbure de silicium, fibres de nitrure de silicium, fibres de nitrure de bore, ou fibres de graphite.
